Europäisches Patentamt

European Patent Office

Office européen des brevets

(19)

(11) Numéro de publication : **0 114 781**
**B1**

(12) **FASCICULE DE BREVET EUROPÉEN**

(45) Date de publication du fascicule du brevet :
06.05.87

(21) Numéro de dépôt : **84450002.5**

(22) Date de dépôt : **13.01.84**

(51) Int. Cl.⁴ : **F 01 C   9/00**, F 02 G   1/044,
F 02 G   1/045

(54) **Machine thermique à source d'énergie externe ou interne aux cylindres du type compresseur ou moteur à cycle de Stirling par exemple.**

(30) Priorité : 24.01.83 FR 8301128

(43) Date de publication de la demande :
01.08.84 Bulletin 84/31

(45) Mention de la délivrance du brevet :
06.05.87 Bulletin 87/19

(84) Etats contractants désignés :
AT BE CH DE FR GB IT LI LU NL SE

(56) Documents cités :
DE-A- 2 406 684
FR-A- 1 001 748
FR-A- 1 553 277
FR-A- 2 193 413
FR-A- 2 279 940
GB-A-     8 494

(73) Titulaire : **GAZ DE FRANCE**
**361 Av. du Président Wilson - B.P. 33**
**F-93211 La Plaine St. Denis (FR)**

**Bras, Jean**
**9, bis chemin de Bourdette**
**F-31400 Toulouse (FR)**

(72) Inventeur : **Bras, Jean**
**9 Bis chemin de la Bourdette**
**F-31400 Toulouse (FR)**

(74) Mandataire : **Ravina, Bernard**
**Cabinet Bernard RAVINA 24, boulevard Riquet**
**F-31000 Toulouse (FR)**

EP 0 114 781 B1

## Description

La présente invention concerne les machines thermiques à source d'énergie externe ou interne aux cylindres, du type compresseur ou moteur à cycle de stirling par exemple.

On connaît des machines thermiques dont les pistons sont animés d'un mouvement rectiligne alternatif avec embiellage et étanchéité appropriés. C'est ainsi que l'on connaît par exemple des moteurs à combustion interne à pistons opposés et à trajectoire rectiligne alternative du type polygonal (brevet FR 1 176 758). Ce genre de moteur est plus connu sous le nom de moteur « delta ».

On connaît également des moteurs à cylindres toriques et à pistons orbitaux dont les phases du cycle thermique sont obtenues par operculation directe sur la trajectoire des pistons. Ce genre de moteur est . doté d'un obturateur rotatif à commande intermittente et rapide par came croix de malte (brevet FR 1 432 977).

On connaît également des moteurs toriques à combustion interne dont les pistons soumis à la force centrifuge sont animés d'un mouvement circulaire auquel se superpose un mouvement circulaire alternatif agissant sur un levier oscillant (brevet FR 2 003 686).

On connaît également des machines à pistons rotatifs du type épitrochoïdal avec courbe enveloppe correspondante (brevet FR 2 037 381).

On connaît également des machines à cycle de stirling dont les pistons sont animés d'un mouvement rectiligne alternatif avec embiellage rhomboïdal et étanchéité par jupe roulante et contrepression.

On connaît également des réalisations de moteurs stirling à quatre chambres cylindriques de type à barillet avec piston à double effet agissant par des patins de glissements sur un plateau incliné qui joue le rôle de vilebrequin simplifié.

Toutes ces machines à source d'énergie externe ou interne dont les plus caractéristiques sont citées plus haut posent un certain nombre de problèmes dus à l'existence :

— de pertes par frottement inhérentes à la cinématique choisie et dues à une trajectoire importante de ces forces parasites,

— et de forces de frottement, loin d'un axe de rotation, dont l'intensité est accrue par la force centrifuge ou par l'action d'une composante due à la poussée des gaz.

On connaît également du brevet GB-A-8494(1914), une machine thermique comportant une chambre en forme de tore complet recevant des pistons en forme de secteur torique, articulés chacun à un bras lui-même articulé à un arbre central fixe. Des lumières sont pratiquées dans la chambre pour le passage des bras. Sous l'action de la poussée des gaz et de la force centrifuge, le piston en raison du fait qu'il est articulé à son bras, pivote autour de l'axe d'articulation et vient frotter plus ou moins contre la chambre torique.

On retrouve également dans ce cas, des forces de frottement loin d'un axe dont la trajectoire importante diminue le rendement du moteur. De plus l'usinage correct de chaque piston et de l'intégralité de la chambre est nécessaire pour assurer un guidage précis du piston dans la chambre d'une part et pour diminuer, autant que faire ce peut, l'intensité de ces forces parasites de frottement loin d'un axe. Un tel usinage est délicat à réaliser.

De plus, sont présents des problèmes d'étanchéité dynamique entre des pièces dont le mouvement rectiligne alternatif ou angulaire les unes par rapport aux autres est de grande amplitude.

Les machines à cycle de stirling posent, en plus des problèmes précédemment énoncés, des problèmes de variation de puissance.

En effet, la variation de puissance est souvent obtenue par injection de fluide par exemple d'hydrogène en début de compression isotherme avec un distributeur haute pression très délicat.

Les machines à cycle de stirling comme on le sait, présentent des chambres réalisant avec leur piston un capsulisme chaud et/ou un capsulisme froid, lesdits capsulismes chaud et froid étant raccordés par des moyens appropriés, constitués par une source froide, un accumulateur thermique et une source chaude et traversés alternativement par une masse de gaz. Pour ces machines à cycle de stirling se pose un problème dû à des pertes de charges résultant de la complexité des liaisons entre les capsulismes chaud et froid.

En effet, la disposition des cylindres conduit à réaliser pour chaque moyen raccordant deux capsulismes, des faisceaux tubulaires avec des éléments de forme et de longueur différentes manquant d'équipotentialité hydraulique et conduisant à des débits différents.

Une telle machine est notamment décrite dans le brevet FR-A-1 001 748 déposé par PHILIPS.

Cette machine est composée de quatre chambres cylindriques qui reçoivent chacune un piston à double effet cylindrique réalisant avec ladite chambre deux capsulismes cylindriques. L'inconvénient d'un tel moteur réside dans l'impossibilité d'assurer l'alignement des surfaces terminales des capsulismes. Les circuits de transfert bien que pouvant être constitués chacun à partir d'éléments de forme et de longueurs identiques sont raccordés aux capsulismes par des conduites coudées ce qui introduit des pertes de charges et des volumes parasites et donc une baisse du rendement du moteur.

Enfin, il est à noter que les machines thermiques de l'art antérieur font appel pour leur fabrication à de nombreuses pièces mécaniques différentes et posent des problèmes de maintenance avec remplacement des pièces peu accessibles.

La présente invention a pour objet de résoudre les problèmes précédemment énoncés en mettant en œuvre une machine thermique pour laquelle la forme des chambres, la forme des pistons et la cinématique sont conçues de manière à permettre la réduction des pertes par frottement et la réduction du trajet de ces forces de frottement.

De plus, la machine selon l'invention est conçue de manière à réduire le trajet des organes en mouvement, ce qui autorise des solutions simples pour obtenir une étanchéité dynamique totale avec des frottements négligeables. La présente invention a également pour objet une machine à cycle de stirling pour laquelle la variation de puissance est obtenue d'une manière simple.

Egalement, la présente invention a pour objet une machine thermique à cycle de stirling pour laquelle la disposition d'un capsulisme chaud par rapport à un capsulisme froid autorise le transfert d'une masse de gaz de l'un à l'autre avec des pertes de charges réduites.

A cet effet, considérons la machine thermique, selon la présente invention, du type suivant :

— la machine comporte plusieurs chambres dans chacune desquelles est monté un piston double effet réalisant avec ladite chambre un capsulisme de détente ou capsulisme chaud et un capsulisme de compression ou capsulisme froid,

— lesdites chambres sont raccordées de telle manière que chaque capsulisme de détente, réalisé par un ensemble chambre et piston, soit en correspondance par un circuit de transfert approprié avec un capsulisme de compression réalisé par un autre ensemble chambre et piston.

— Chacun desdits pistons assure le transfert d'une masse de gaz d'une chambre à l'autre et est pourvu d'un bras coopérant avec des moyens de transformation du mouvement alternatif desdits pistons en un mouvement circulaire communiqué à un arbre de sortie.

Ladite machine est alors caractérisée essentiellement en ce que la paroi terminale de chaque capsulisme de compression d'un ensemble chambre et piston est coaxiale et parallèle avec la paroi terminale du capsulisme de détente y associé d'un autre ensemble chambre et piston — les deux capsulismes associés donc étant en regard direct — et que les chambres sont réparties autour des moyens de transformation du mouvement des pistons et autour de l'arbre de sortie, chaque chambre, chaque piston et chaque capsulisme sont en forme de secteur torique.

Selon une autre caractéristique de l'invention, le bras de chaque piston est solidaire d'un arbre monté rotatif dans des paliers.

Suivant une autre caractéristique d'une machine thermique à cycle de stirling, le volume dans lequel évolue la masse de gaz entre deux chambres, dont le capsulisme de détente de l'une est en regard avec le capsulisme de compression de l'autre, est en relation avec une chambre à volume réglable en sorte que par variation du volume de ladite chambre soit obtenue la variation de puissance de la machine. D'autres avantages et caractéristiques de l'invention apparaîtront à la lecture de la description de formes préférentielles de réalisation du moteur données à titre d'exemples non limitatifs en se référant aux dessins annexés en lesquels :

La figure 1 est une vue du moteur selon l'invention.

Les figures 2 et 3 sont des vues en coupe d'un carter torique du moteur montrant également le dispositif de variation de puissance.

La figure 4 est une vue en coupe selon la ligne AA de la fig. 3.

La figure 5 est une vue de détail de la liaison du piston avec son bras.

La figure 6 est une vue de détail montrant le montage des segments sur le piston.

La figure 7 est une vue de la seconde forme de réalisation de la source chaude.

La figure 8 est une vue de la seconde forme de réalisation des moyens d'étanchéité.

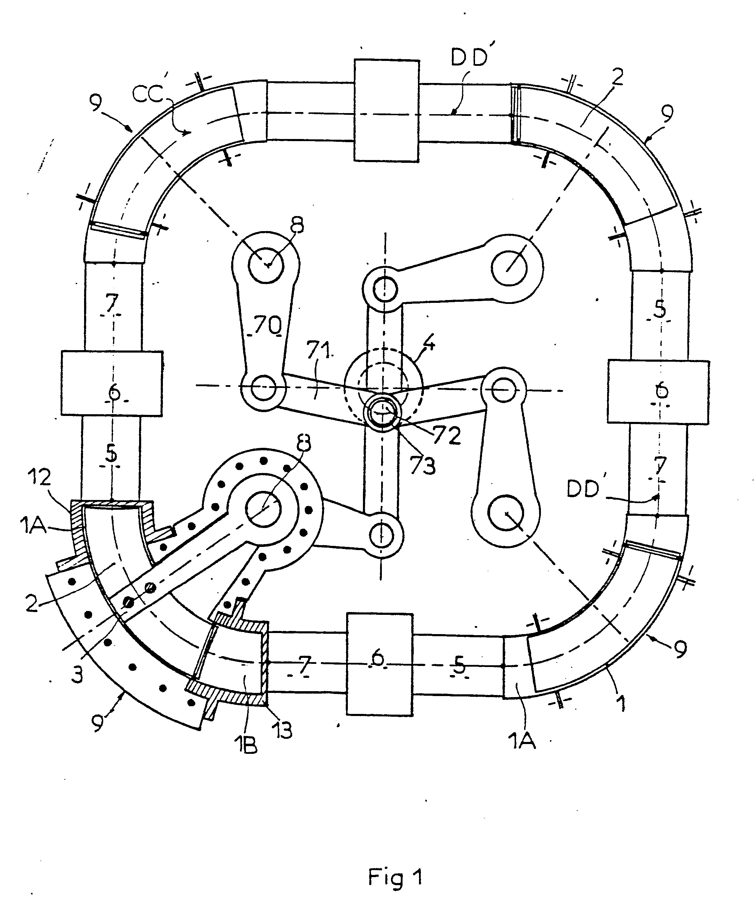

Telle qu'elle est représentée sur la figure 1, la machine selon l'invention comporte de préférence plusieurs blocs moteurs 9 identiques et séparés dans chacun desquels est ménagée une chambre 1 dans laquelle se déplace un piston 2 à double effet comportant un bras rigide 3. Ce bras est fixé rigidement au piston.

Ce bras fait office de liaison avec des moyens de transformation du mouvement alternatif dudit piston en un mouvement circulaire continu communiqué à un arbre 4.

Les chambres 1 sont réparties autour des moyens de transformation du mouvement des pistons et autour de l'arbre 4, de plus, elle sont disposées dans un même plan en sorte de réaliser une machine plate et donc peu encombrante. Les pistons 2 sont associés aux moyens de transformation du mouvement alternatif de telle manière que le mouvement du piston de l'un d'entre eux soit décalé en phase d'un angle de 90° par rapport au mouvement des pistons voisins.

De cet angle de déphasage peut dépendre la puissance de la machine et le rendement.

Chaque ensemble piston et chambre réalise un capsulisme chaud ou de détente 1A et un capsulisme froid ou de compression 1B, ces deux capsulismes étant situés de part et d'autre du piston.

Les chambres 1 au nombre de quatre sont raccordées les unes aux autres de telle manière que chaque capsulisme de détente 1A réalisé par un ensemble chambre et piston soit en correspondance directe par un circuit de transfert approprié avec un capsulisme de compression 1B réalisé par un autre ensemble chambre et piston, les deux capsulismes étant en regard direct l'un de l'autre.

Le circuit de transfert assurant la correspondance entre les deux capsulismes est traversé alternativement par une masse de gaz transférée d'un de ces capsulismes à l'autre par les pistons.

Les chambres 1, les pistons 2 et donc les capsulismes chauds et froids définis par chaque chambre et chaque piston correspondant sont en forme de secteur torique.

Les deux parois terminales de chaque chambre 1 sont disposées chacune suivant un plan méridien au secteur torique.

Ces deux parois terminales sont chacune la paroi terminale du capsulisme chaud et la paroi terminale du capsulisme froid réalisé par cette chambre et son piston associé.

L'arc de circonférence CC' centré à l'axe du secteur torique disposé dans le plan équateur du secteur torique, passant par le centre de toutes les sections méridiennes de la chambre 1 et compris entre les deux surfaces terminales a de préférence une valeur égale à $\pi/2$.

Les quatre circuits de transfert se développent chacun suivant un axe DD'.

Chaque circuit de transfert est coaxial à son axe DD'. Les quatre circuits de transferts sont de même longueur.

De préférence la disposition des chambres 1 et des circuits de transferts se définie comme mentionnée ci-après.

— Les quatre axes DD' des circuits de transfert sont disposés chacun suivant les côtés d'un carré centré à l'arbre 4 et les quatre arcs de circonférence CC' forment les sommets arrondis de ce carré.

— Les quatre axes DD' sont tangents deux à deux à un même arc de circonférence CC' et se raccordent en extrémité de cet arc de circonférence.

— Les quatre centres des arcs de circonférence CC' sont disposés chacun au sommet d'un carré centré à l'arbre 4, chaque côté de ce carré étant parallèle à deux axes DD'.

En considérant maintenant un même circuit de transfert et le capsulisme froid en relation avec ce circuit de transfert on remarque que les parois terminales de ces deux capsulismes sont de préférence perpendiculaires et coaxiales à l'axe DD' de ce circuit de transfert. Donc ces deux parois sont parallèles l'une à l'autre et disposées en regard direct l'une de l'autre suivant un même axe DD' (fig. 1).

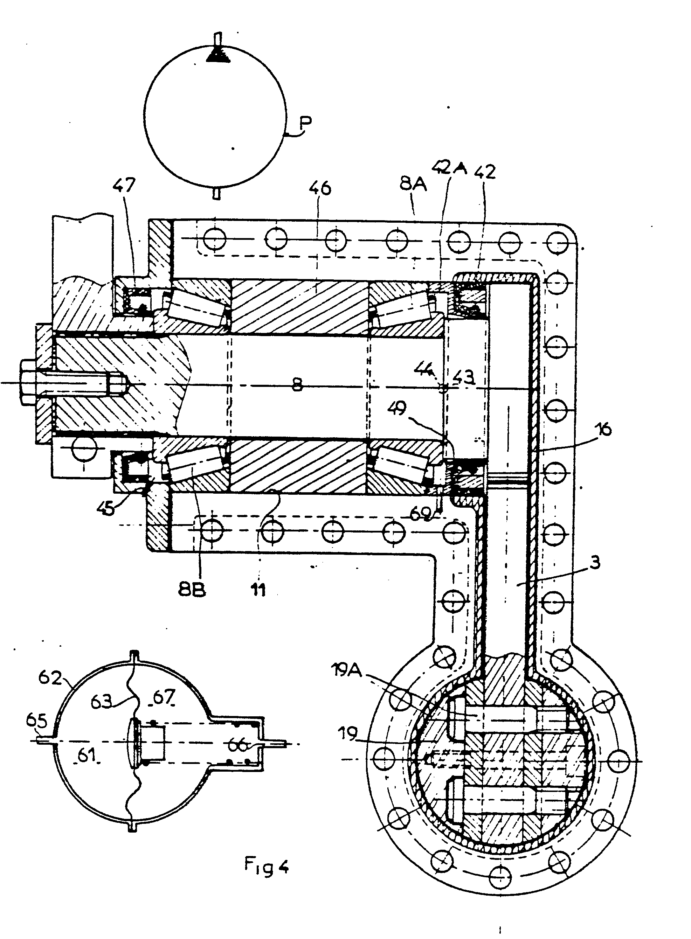

En se reportant à la fig. 4 on peut voir que le bras 3 de chaque piston est fixé rigidement à un arbre 8 monté sur des paliers 8A et 8B. Ainsi le piston qui est animé d'un mouvement circulaire alternatif est guidé dans la chambre non pas par les faces toriques de celles-ci, mais par l'arbre 8 monté dans les paliers 8A et 8B.

Les quatre arbres 8 sont disposés chacun au sommet d'un carré, ce carré étant celui selon les sommets duquel sont disposés les centres des arcs de circonférence CC'.

Le mouvement alternatif des pistons 2 et la liaison rigide du bras 3 d'une part au piston 2 et d'autre part à l'arbre 8 élimine les forces parasites loin de l'axe de rotation et les mouvements angulaires de cet arbre n'entraînent que de très faibles déplacements relatifs qui sont fonction du diamètre de l'arbre et de l'amplitude du mouvement de l'arbre.

De plus, le mouvement angulaire alternatif de cet arbre 8 permet une liaison directe et coaxiale avec un autre arbre récepteur d'une machine réceptrice construite suivant la même architecture, compresseur par exemple, à la condition d'associer la phase compression d'un piston compresseur à la phase détente du piston moteur.

Il résulte de cette combinaison possible une réduction de dimension de la liaison du mécanisme de déphasage entre chacun des quatre pistons à double effet.

Il en résulte également une réduction des pertes dues aux mécanismes de transformation des mouvements puisque l'on peut substituer à la chaîne (rectiligne alternatif, bielle manivelle, rotation, rotation, bielle manivelle, rectiligne alternatif) la liaison directe (moteur, circulaire alternatif, circulaire alternatif, récepteur).

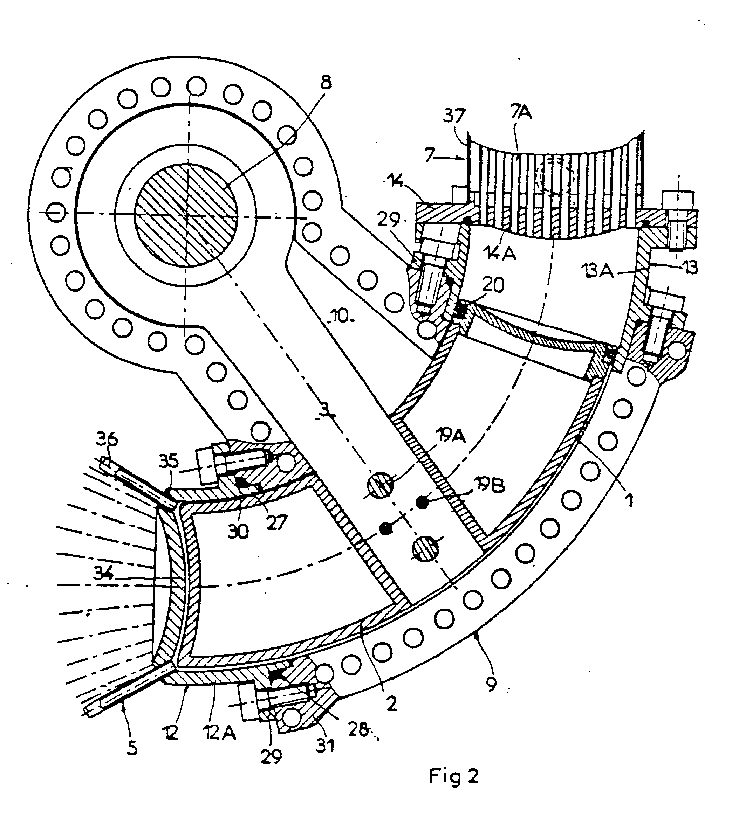

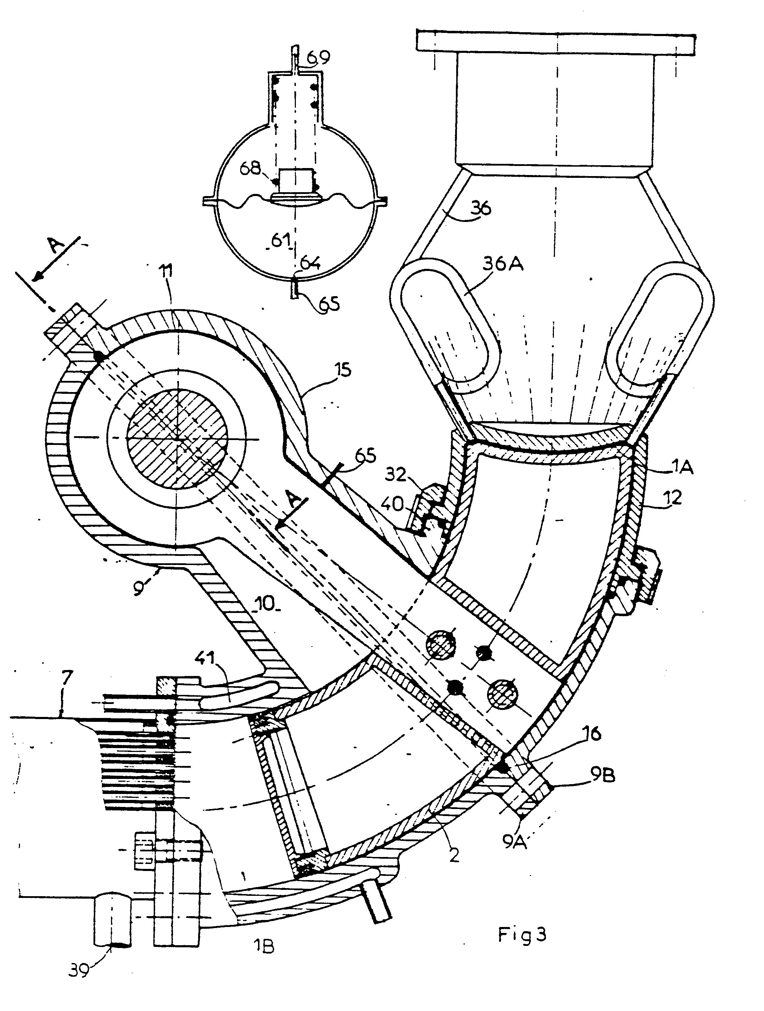

Conformément aux caractéristiques précédemment énoncées, les blocs moteurs 9 sont régulièrement répartis autour des moyens de transformation du mouvement alternatif du piston et de l'axe de l'arbre 4 et présentent chacun une forme torique dans laquelle est ménagée la chambre 1, une forme en secteur cylindrique radial à la forme torique et un corps de palier 15 cylindrique perpendiculaire à ladite forme en secteur cylindrique (fig. 2 et 3).

Dans la forme en secteur cylindrique est ménagé un logement 10 pour le bras 3.

Ce logement est en communication avec la chambre 1 et présente une forme également en secteur cylindrique pour assurer un débattement suffisant au bras 3.

Dans le corps de palier 15 cylindrique est ménagé un logement 11 également cylindrique dans lequel sont disposés l'arbre 8 et les paliers 8A et 8B.

Pour le montage du piston 2, du bras 3, de l'arbre 8 et des paliers 8A et 8B, chaque bloc 9 se sépare de préférence en deux demi-coquilles 9A et 9B assemblées l'une à l'autre par boulonnage.

Les deux demi-coquilles métalliques sont assemblées l'une à l'autre suivant un plan de joint longitudinal et médian à la chambre (fig. 4) ou suivant un plan de joint transversal à ladite chambre et médian au logement 11 de l'arbre 8 (fig. 2 et 3).

L'étanchéité entre les deux demi-coquilles 9A et 9B peut-être obtenue par tous moyens et procédés connus, soit par un assemblage à chaud avec soudure à basse température après étamage et serrage des surfaces en contact par boulons précontraints (fig. 2) ou par interposition d'un joint d'étanchéité 16 connu en soi (fig. 4).

La chambre 1 de chaque bloc présente un diamètre avec jeu calculé pour assurer la mobilité du piston sans frottement de celui-ci contre les parois de ladite chambre.

En outre, le piston comporte des moyens assurant sa liaison de manière rigide au bras articulé 3 ce qui permet de neutraliser l'action des forces centrifuges et l'action de la composante due à la poussée des gaz et les actions dues aux forces d'inertie.

Il est bien évident que les dimensions de la chambre et du piston tiennent compte des déformations résiduelles dues aux contraintes et dilatation pour écarter tout danger de frottement du piston contre la chambre 1.

De préférence le piston 2 est constitué en deux parties creuses, toriques réunies l'une à l'autre et au bras 3 par des moyens de liaison de manière rigide.

Ces moyens de liaison sont à titre non limitatif constitués par deux chapes 17 et 18 (fig. 5) solidaires chacune d'une des parties du piston, venant lors du montage s'imbriquer l'une dans l'autre et enserrer l'extrémité du bras 3 et par deux organes presseurs 19 en contact avec la chape externe 17 avec rupture thermique.

Deux vis 19A et 19B traversent de part en part le bras et les chapes et maintiennent les organes 19 en pression contre celles-ci (fig. 4 et 5).

Les organes presseurs sensiblement de forme torique constituent également matière de remplissage.

La liaison des pistons avec le bras 3 peut comporter une isolation thermique évitant les pertes par conduction.

Le piston en extrémité froide, c'est-à-dire l'extrémité réalisant avec la chambre 1, le capsulisme de compression ou capsulisme froid est équipé d'au moins un segment d'étanchéité assurant la séparation entre le capsulisme froid et l'enceinte pressurisée d'un même bloc moteur. Cette enceinte est formée par le capsulisme chaud de ce bloc par la partie de la chambre 1 diminuée du capsulisme froid et par le logement 10 du bras 3.

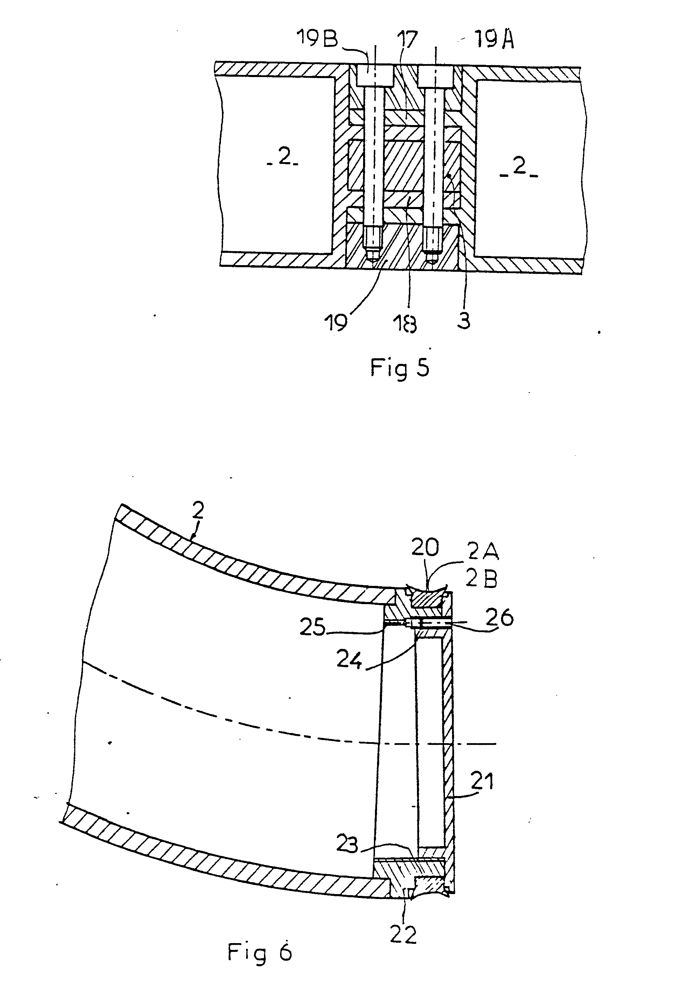

Le segment d'étanchéité 2A est maintenu en position par un organe 2B amovible pour pourvoir au remplacement dudit segment sans démontage du piston (fig. 6).

Le segment d'étanchéité présente deux lèvres annulaires comme représenté en fig. 6.

Selon la forme préférée de réalisation, le segment est monté sur une pièce 22 rapportée en extrémité du piston, ladite pièce recevant l'organe amovible 21.

La pièce 22 tubulaire présente un épaulement annulaire 23 formant avec l'organe amovible 21 la gorge du segment.

Cet organe est constitué par un disque métallique fixé de manière amovible à la pièce 22.

A cet effet, le disque est doté d'un épaulement annulaire 24 fileté coopérant avec un filetage interne 25 ménagé dans la surface interne de la pièce 22.

Selon un exemple préférentiel de réalisation, ce moyen est constitué par une vis disposée dans un orifice ménagé simultanément dans la pièce 22 et dans le disque au niveau de leur partie filetée.

Il est bien évident que ce mode de liaison n'est donné ici qu'à titre purement indicatif, c'est ainsi que le disque 21 pourra comporter un épaulement de centrage à la pièce 22 et être lié à celle-ci par des vis.

Il est bien évident également que l'extrémité du piston pourra être suffisamment épaisse pour recevoir directement le disque et les aménagements tels que précédemment décrits.

L'utilisation d'un organe amovible pour le maintien des segments autorise l'utilisation de segments annulaires non fendus avec lèvres élastiques ce qui renforce l'étanchéité.

Le fait de monter le ou les segments dans la partie de la chambre 1 réalisant avec le piston le capsulisme de compression ou capsulisme froid, permet l'utilisation de segments en matière synthétique, à très faible coefficient de frottement sans nécessiter de lubrification. Par exemple, le ou les segments pourront être constitués en une matière connue sous le nom commercial de « teflon ».

Egalement le fait de n'équiper de segments que l'extrémité froide du piston permet de ne limiter l'usinage de la chambre 1 qu'au capsulisme froid.

Entre l'enceinte pressurisée telle que précédemment définie et le logement 11 de l'arbre 8 est disposé un organe d'étanchéité.

Cet organe d'étanchéité est constitué par un joint à lèvre 42 fixé dans le logement 11 et monté sur un épaulement 43 de l'arbre 8 au niveau de la liaison dudit arbre 8 avec ledit bras 3 (fig. 4).

Une entretoise 46 est montée entre les deux paliers 8A et 8B et autour de l'arbre 8.

La lèvre du joint 42 est soumise à une contre-pression d'huile de lubrification des paliers 8A et 8B injectée dans le logement 11 au niveau du premier palier 8A et extraite de ce logement au niveau du second palier 8B.

De plus, est réalisé un double centrage de l'arbre 8 dans le logement 11 et dans l'entretoise 46 en sorte d'obtenir entre ledit arbre 8 et ladite entretoise 46 une surface à section de fuite constante (fig. 4).

L'huile sous pression est injectée dans le logement 11 par une pompe P actionnée par une transmission, non représentée, associée à l'arbre 4 du moteur.

Le corps de palier 15 dans lequel est ménagé le logement 11 comporte un orifice transversal 44 d'amenée de l'huile sous pression débouchant dans ledit logement entre le joint à lèvre et le premier palier et d'un orifice d'évacuation 45 de l'huile situé en extrémité dudit logement 11.

L'orifice 44 est raccordé par une conduite à l'orifice de refoulement de la pompe et l'orifice 45 est raccordé par une conduite à l'orifice d'aspiration.

Les deux paliers sont constitués par exemple par des roulements à rouleaux coniques pour assurer le double centrage de l'arbre 8.

Le diamètre de l'orifice interne de l'entretoise 46 assurant le passage de l'arbre 8 est tel que l'huile lors de son passage entre l'arbre et l'entretoise est laminée, ce qui permet de diminuer fortement sa pression au niveau du second palier 8B et sur la lèvre du joint 47 associé à ce palier.

Chaque bloc moteur est doté dans chaque logement 11 d'un organe 42A de soutien de la lèvre du joint 42.

Cet organe 42A comporte une contre-lèvre 49 élastique venant s'engager sous la lèvre du joint.

La contre-lèvre 49 présente une forme décroissante et est apte à se déformer en fonction de la différence de pression entre le logement 11 et l'enceinte pressurisée de manière à porter sur l'arbre 8 lorsque la vitesse angulaire de ce dernier est nulle et/ou lorsque la différence de pression est maximale.

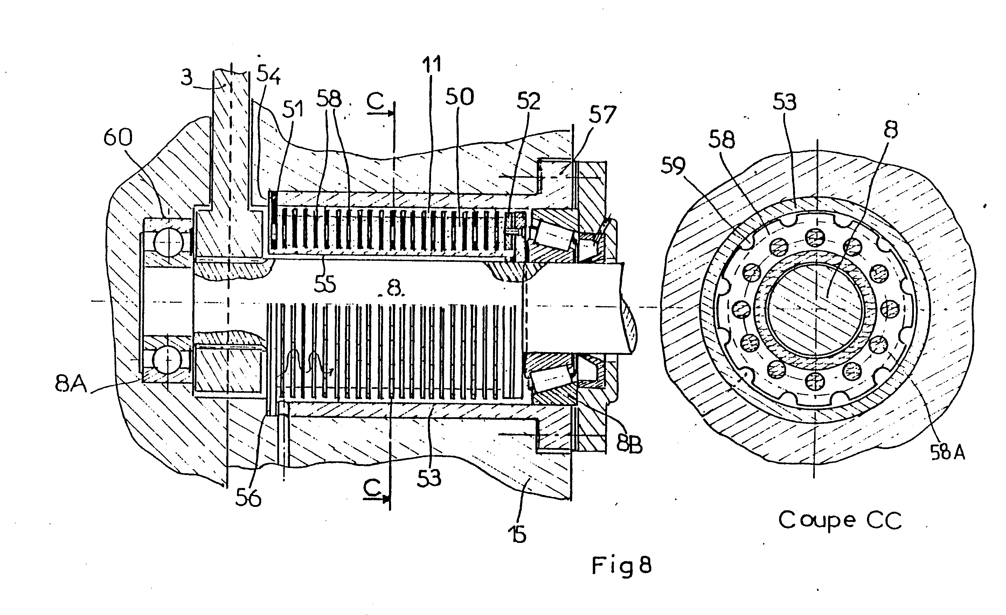

Selon une autre version de réalisation comme illustrée en fig. 8, l'organe d'étanchéité est constitué par une paroi élastique imperméable au gaz, déformable par torsion. Cette paroi disposée autour de l'arbre 8, est solidaire de celui-ci et de l'une des parois du logement 11. De préférence la paroi élastique (fig. 8) est constituée par un manchon cylindrique 50 susceptible de se déformer par torsion autour de l'axe de l'arbre.

Le manchon 50 est doté de deux parois radiales terminales 51, 52, en forme de couronne dont l'une, la paroi 52 est solidaire de l'arbre 8 et dont l'autre, la paroi 51 est appliquée par un organe de serrage 53 contre un épaulement 54 ménagé dans le fond du logement en avant du bras 3.

Le diamètre extérieur du manchon est légèrement plus important pour éviter tout contact par frottement sur l'arbre 8.

Cet espace est en communication avec l'enceinte pressurisée. L'étanchéité entre cet espace annulaire et le logement 11 est assurée d'une part par le type de liaison utilisé entre la couronne 52 et l'arbre 8, par exemple une liaison par soudure avec un joint d'étanchéité et d'autre part par la partie 56 du manchon interposée entre la couronne 51 et l'épaulement 54 du logement.

La couronne 51 présente un diamètre plus important que celui du manchon 50 en sorte de pouvoir coopérer avec l'organe 53 pour le serrage du joint d'étanchéité 56.

Cet organe de serrage 53 de forme tubulaire et de section transversale en forme d'anneau est enfilé dans le logement 11 autour du manchon et présente à une de ses extrémités une embase circulaire 57 de fixation à l'embouchure dudit logement.

L'autre extrémité de l'organe de serrage 53 est appliquée contre la couronne 51 et est pressée contre celle-ci par vissage des organes de fixation de l'embase 57 au bossage 15.

Pour subir les déformations radiales et encaisser la pression du gaz sans risque de détérioration, le manchon 50 comporte une armature et est refroidi par de l'huile assurant également la lubrification du palier 8B.

Cette armature est constituée par des couronnes métalliques 58 parallèles noyées dans la masse du manchon et dont la périphérie dépasse la surface extérieure dudit manchon.

Le diamètre supérieur des couronnes 58 est inférieur au diamètre intérieur de l'organe de serrage 53.

Les couronnes métalliques 58 parallèles sont réparties suivant une loi conforme aux contraintes dues aux pressions ou sont régulièrement espacées.

Les parois métalliques 58 présentent des orifices transversaux 58A pour améliorer l'ancrage à la matière constituant le manchon.

Chaque couronne dans sa périphérie présente des entailles 59 angulairement espacées dans lesquelles a lieu le passage de l'huile de refroidissement.

De préférence, les entailles des couronnes sont angulairement décalées d'une couronne à l'autre en sorte que l'huile suive un parcours sinueux au travers de celles-ci ce qui permet d'accroître la capacité de refroidissement.

Pour réduire encore les risques de détérioration, le manchon présente une longueur suffisamment importante pour limiter l'angle de rotation de chaque couronne 58.

Dans la forme de réalisation représentée en fig. 8 on voit que le manchon couvre toute la longueur de l'arbre 8 comprise entre le bras 3 et le second palier 8B.

Le palier 8A selon cette seconde forme de réalisation est monté dans un alésage 60 ménagé dans le bloc en arrière du bras 3.

Ce palier 8A n'étant pas lubrifié par l'huile de refroidissement est du type graissé à vie.

Comme on le comprend, les moyens d'étanchéité tels que décrits permettent une étanchéité totale avec des frottements négligeables de par le fait que l'arbre 8 est animé d'un mouvement circulaire alternatif de faible amplitude.

Par exemple, l'amplitude du mouvement circulaire alternatif de l'arbre 8 est égal à environ + ou — 7°, c'est-à-dire qu'un point quelconque de la surface de l'arbre 8 parcourt dans un sens et dans l'autre un arc de circonférence de valeur égale à environ 14°.

L'enceinte pressurisée de chaque bloc tel que définie plus avant est en communication avec un capsulisme froid d'un autre bloc par l'intermédiaire du circuit de transfert disposés entre ces deux blocs moteurs. Le volume ainsi formé, dans lequel est emprisonnée la masse de gaz, subit des variations périodiques fonction de la course de chaque piston. Ce volume présente une valeur minimale en fin du transfert de la masse de gaz du capsulisme de compression 1B vers le capsulisme de détente 1A et une valeur maximale lors du transfert de la masse de gaz du capsulisme 1A vers le capsulisme 1B.

Pour réduire la valeur de ce volume, l'angle de la couronne torique du volume libre du capsulisme correspond sensiblement à l'amplitude du mouvement du piston (fig. 2 et 3). Par exemple l'angle de la couronne torique est sensiblement égal à 15°.

A titre d'exemple les capsulismes 1A et 1B de chaque bloc 9 sont réalisés chacun par le piston et par une calotte amovible rapportée sur la forme en secteur torique dudit bloc moteur (fig. 2 et 3). Ces calottes étant en forme de secteur torique.

La calotte chaude 12 torique correspondant au capsulisme chaud 1A de la chambre 1 est raccordée à un circuit de transfert et la calotte 13 correspondant au capsulisme 1B de la chambre 1 est raccordée à un autre circuit de transfert.

La calotte chaude 12 en un seul bloc présente une jupe torique 12A et une paroi terminale 34, concave, percée d'orifices de communication 35 avec le circuit de transfert. La paroi terminale concave 34 pénètre dans le volume défini par la jupe 12A. Cette paroi est perpendiculaire à l'axe DD' du circuit de transfert et est coaxiale à celui-ci.

La calotte 13 présente une jupe torique 13A et reçoit un couvercle culasse 14 percé d'orifices de communication 14A de ladite calotte avec un circuit de transfert. Ce couvercle est également perpendiculaire et coaxial à l'axe DD' du circuit de transfert.

Chaque calotte est dotée d'un épaulement de centrage 27 et d'une embase 29 de fixation au bloc correspondant avec interposition d'un joint d'étanchéité 30 et d'une isolation thermique évitant les pertes par conduction (fig. 2).

L'épaulement de centrage 27 est logé dans un lamage 28 pratiqué dans le bloc moteur correspondant en extrémité de la chambre torique 1. L'embase 29 est fixée au bloc par plusieurs vis engagées dans des orifices filetés ménagés dans des bossages 31 répartis autour de l'extrémité torique du bloc (fig. 2).

Selon une autre forme de réalisation l'embase est fixée au bloc par une bague filetée 32 venant coopérer avec une partie cylindrique 40 filetée ménagée en extrémité de la zone torique du bloc (fig. 3).

Il est bien évident que tout autre type de liaison démontable pourra être employé.

Selon la forme de réalisation représentée en fig. 3, le capsulisme 1B est ménagé dans le bloc tandis que le capsulisme 1A est ménagé dans la calotte 12.

Selon cette forme de réalisation, le capsulisme 1B de la chambre reçoit un couvercle 14.

Sans sortir du cadre du présent brevet on pourra également prévoir le cas d'un capsulisme chaud ménagé dans le bloc et d'un capsulisme froid ménagé dans une calotte froide 13 et également le cas d'un capsulisme chaud et d'un capsulisme froid ménagés tous deux dans la partie torique dudit bloc moteur.

Le couvercle 14 est fixé par exemple à la calotte froide 13 (fig. 2) ou au bloc 9 (fig. 3) par des vis ou par des écrous et goujons.

Ces vis sont engagées dans des orifices filetés pratiqués dans une embase circulaire de la calotte froide 13 ou dans des bossages du bloc (fig. 2).

Selon l'exemple préférentiel de réalisation, la machine thermique fonctionne suivant le cycle de stirling et les circuits de transfert en relation chacun avec un capsulisme de compression ou capsulisme froid d'un bloc 9 et avec un capsulisme de détente ou capsulisme chaud d'un autre bloc sont constitués chacun par une source chaude 5 en relation avec le capsulisme chaud 1A, par un accumulateur thermique 6 ou régénérateur en relation avec ladite source chaude et par une source froide 7 en relation avec le capsulisme froid 1B et avec ledit accumulateur thermique. Au cours d'un cycle correspondant à un tour complet de l'arbre 4, la masse de gaz emprisonnée dans un capsulisme froid, une source froide, un régénérateur, une source chaude et un capsulisme chaud est comprimée à froid, subit un échauffement isochore en étant transférée vers le capsulisme chaud, se détend et donne une impulsion au piston du capsulisme chaud et est transféré du capsulisme chaud vers le capsulisme froid, ce transfert étant effectué avec refroidissement isochore de ladite masse de gaz.

Pour réduire au minimum les pertes de charges, et les volumes parasites tout en ayant une surface d'échange maximum, la source chaude 5, le régénérateur 6 et la source froide 7 sont axialement alignés et l'axe DD' suivant lesquels ils se développent est perpendiculaire et coaxial à la paroi terminale 34 du capsulisme chaud et au couvercle 14 du capsulisme froid, ces deux capsulismes étant bien entendu ceux qui sont associés à ce circuit de transfert. Chaque source froide ou chaude est constituée par plusieurs conduites traversées par la masse de gaz lors de son transfert d'une chambre à l'autre.

Les conduites de chaque source présentent des dimensions identiques et sont disposées suivant les génératrices d'un solide de révolution centré à l'axe d'alignement desdites sources ou sont parallèles les unes aux autres.

Cette disposition assurant une liaison équipotentielle entre les deux capsulismes en regard l'un de l'autre, permet d'obtenir un débit de gaz identique dans chaque conduite.

Les conduites 36 de la source chaude sont engagées et soudées chacune par une de leurs extrémités dans les orifices 35 de la calotte 12. Pour leur autre extrémité les conduites 36 sont en relation avec le régénérateur ou accumulateur thermique.

Selon la forme de réalisation représentée en fig. 3, les conduites 36 sont disposées sensiblement suivant les génératrices de deux cônes accolés par leur grande base et présentent chacune une boucle 36A en sorte d'augmenter la surface d'échange.

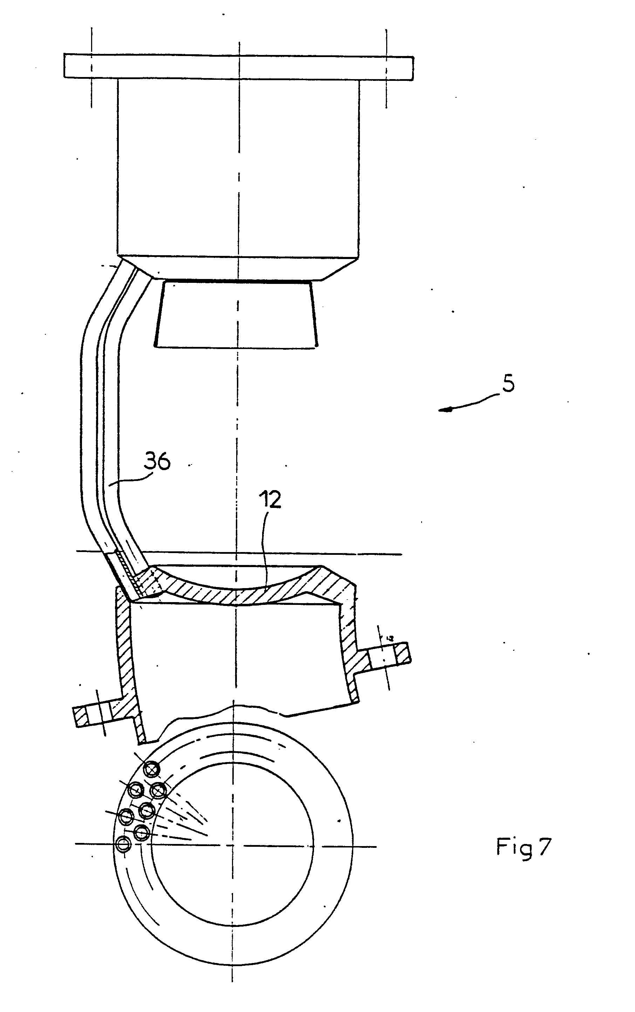

Selon une autre forme de réalisation (fig. 7) les conduites 36 de la source chaude sont disposées suivant les génératrices d'un cylindre et leurs extrémités se rapprochent de l'axe d'alignement pour se raccorder au régénérateur 5 ou à la calotte chaude 12.

Pour augmenter la surface d'échange les conduites 36, de la forme de réalisation précédemment décrite, sont disposées suivant deux ou plusieurs rangs concentriques en quinconce.

Avec les conduites de la source chaude coopère une source de chaleur connue en soi externe, interne ou imbriquée au volume délimité par les conduites.

Les conduites 7A de la source froide 7 sont parallèles les unes aux autres.

Les conduites 7A sont disposées dans une enveloppe 37 et baignent dans un liquide de refroidissement (fig. 2).

L'enveloppe 37 est dotée d'un orifice d'introduction 39 du liquide et d'un orifice de sortie réunis tous deux à un circuit hydraulique assurant la circulation du liquide de refroidissement dans l'enveloppe (fig. 3).

De préférence, le liquide de refroidissement est également conduit dans des canaux 41 pratiqués dans l'épaisseur de la partie maintenue froide de la chambre en sorte d'éviter tout échauffement de ladite partie ou de maintenir ladite partie à température constante (fig. 3).

Lors du transfert de la masse de gaz d'un capsulisme chaud vers un capsulisme froid, le régénérateur absorbe les calories de cette masse. Les calories sont restituées à la masse de gaz lors du transfert inverse.

De par la répartition des blocs autour des moyens de transformation du mouvement alternatif des pistons en un mouvement circulaire communiqué à l'arbre central 4, les quatre temps du cycle de stirling se reproduisent par permutation circulaire.

Donc à chaque tour les quatre masses de gaz subissent respectivement une compression à froid, un échauffement isochore, une détente à chaud et un refroidissement isochore.

Comme dit précédemment la répartition des blocs autour des moyens de transformation du mouvement alternatif des pistons en un mouvement circulaire est réalisée de manière à placer chaque arbre 8 au sommet d'un carré centré à l'arbre 4.

Ces moyens sont constitués par des bras 70 clavetés chacun avec un arbre 8 et par des bielles 71 articulées chacune à un bras 70 et à un même maneton 72 solidaire de l'arbre 4, avec interposition d'une bague 73, ledit maneton étant excentré par rapport à l'arbre 4 et faisant office de vilebrequin.

Comme on peut le voir en figure 1, la valeur de l'entre-axe entre le point d'articulation de chaque bielle au maneton et le point d'articulation de cette bielle au bras 70 est égale à la valeur de l'entre-axe entre le point de liaison du bras 70 à l'arbre 8 et le point d'articulation de ce bras à la bielle.

De plus, lorsque la valeur du volume d'un capsulisme est nulle, la bielle 71 correspondant à ce capsulisme est disposée suivant une position sensiblement radiale à l'arbre 4.

Les bielles 71 sont montées sur un même maneton 72.

Ces bielles sont montées libres en rotation sur la bague 73 et cette bague 73 est montée libre en rotation sur le maneton 72 en sorte de réduire l'importance du glissement des surfaces.

Pour modifier la puissance du moteur, le volume dans lequel évolue la masse de gaz entre deux chambres contiguës, c'est-à-dire le volume formé par le volume interne de la source chaude, du régénérateur et de la source froide, est en relation avec une chambre 61 à volume réglable (fig. 3 et 4).

En effet, on sait que la puissance du moteur dépend étroitement de la valeur de l'écart entre la pression maximum et la pression minimum de la masse de gaz au cours d'un cycle et que la valeur de cet écart dépend de la valeur du volume dans lequel évolue cette masse de gaz. Un accroissement de volume conduit à réduire l'écart entre la valeur maximum et la valeur minimum de la pression de la masse de gaz et à réduire la puissance du moteur.

La variation de ce volume conduit également à la variation de la pression initiale de la masse de gaz ou pression de gonflage.

On sait également que plus est importante cette pression de gonflage, plus est important l'écart entre la pression maximum de la masse de gaz au cours de son évolution sur un cycle.

Préférentiellement la chambre à volume réglable 61 est en communication, par une conduite 65, avec l'enceinte pressurisée précédemment définie, ladite enceinte étant en relation avec le volume sus-évoqué. La variation de volume de la chambre entraîne une variation de pression dans l'enceinte et donc une variation de puissance.

Selon l'exemple préféré de réalisation, la chambre 61 à volume réglable est définie par une paroi 63 déformable dans une enveloppe 62 elle-même en relation avec un circuit de fluide sous pression.

La paroi déformable 63 assure la séparation entre la chambre 61 et le volume variable 67 de l'enveloppe dans lequel est introduit le fluide sous pression.

L'enveloppe 62 de préférence de forme sphérique est percée d'un orifice 64 débouchant dans la chambre 61 et d'un orifice 66 débouchant dans le volume variable 67.

L'orifice 64 reçoit l'extrémité de la conduite 65, l'autre extrémité de cette conduite débouchant dans l'enceinte pressurisée du bloc moteur 9 de préférence, cette conduite débouche dans le logement 10 dudit bloc moteur.

L'orifice 66 reçoit l'extrémité d'une conduite 69 du circuit de fluide sous pression.

L'action du fluide sous pression sur une des faces de la paroi déformable 63 s'oppose à l'action du gaz en pression sur l'autre face de la paroi.

A la variation de pression du fluide introduit dans le volume 67 de l'enveloppe correspond une variation de volume de la chambre 61 et donc une variation de pression du gaz contenu dans ladite chambre et dans l'enceinte pressurisée.

La variation de volume de la chambre 61 cesse dès que l'action du gaz sur une des faces de la paroi 63 est équilibrée par l'action du fluide sous pression sur l'autre face de la paroi.

Comme on le comprend à l'accroissement du volume de la chambre 61 correspond une diminution de pression du gaz emprisonné dans l'enceinte pressurisée et donc une diminution de puissance du moteur.

Inversement à la diminution du volume de la chambre 61 correspond une augmentation de pression du gaz et donc une augmentation de la puissance du moteur.

De préférence à l'action du fluide sous pression sur une des faces de la membrane est superposée l'action d'un organe élastique 68.

Cet organe élastique qui peut être par exemple constitué par un ressort de compression, est disposé dans le volume variable 67, en pression contre la paroi déformable 63 et la paroi interne de l'enveloppe 62. Dans ce volume est disposé également une obturation.

Avantageusement, le circuit du fluide sous pression est associé au circuit d'huile sous pression assurant l'étanchéité entre l'enceinte pressurisée et le logement 11 ce qui permet de commander la puissance du moteur à partir du débit de la pompe P.

Selon l'exemple préférentiel de réalisation, la conduite 69 d'amenée de l'huile sous pression dans le volume 67 débouche dans le logement 11 au niveau du joint 42.

Il est à noter que l'action seule du ressort ne peut s'opposer au déplacement de la paroi déformable 63 dans le volume variable 67 et que la pression d'huile est toujours inférieure à la pression des gaz.

Il est à noter également qu'en période de fonctionnement à pleine puissance, l'action du ressort et l'action de l'huile sous pression repoussent la paroi déformable 63 contre la paroi de l'enveloppe 62, ce qui annule la valeur du volume de la chambre 61.

Avantageusement, en période de fonctionnement en faible puissance et en fonctionnement continu, le volume 61 est isolé de l'enceinte pressurisée par un clapet pour éviter une double baisse de rendement.

La machine telle que décrite présente l'avantage d'être plate et donc peu encombrante.

De plus, la disposition suivant laquelle la paroi terminale d'un capsulisme chaud est disposée en regard direct suivant un axe DD' avec la paroi terminale d'un capsulisme froid permet de concrétiser une bonne solution pour obtenir les phases du cycle de stirling idéal.

En outre, contrairement aux machines thermiques de l'art antérieur, les pistons 2 ne sont pas animés d'un mouvement rectiligne alternatif mais d'un mouvement circulaire alternatif plus simple à transformer en un mouvement circulaire communiqué à l'arbre 4.

De plus le mouvement circulaire alternatif peut être prélevé sur un quelconque des arbres 8 pour actionner un organe récepteur par exemple un compresseur construit suivant une architecture identique.

Egalement il est à noter que l'usinage des surfaces toriques peut être limité qu'à l'usinage du capsulisme froid.

Cet usinage pouvant être facilement réalisé en raison du rapport faible entre la longueur moyenne de l'axe de circonférence de ce capsulisme et le diamètre des sections méridiennes de la chambre 1.

Ce rapport pouvant être par exemple de l'ordre de l'unité ou moins.

On a décrit ci-dessus une machine thermique dotée de quatre blocs moteur mais il va de soi que sans sortir de l'esprit de la présente invention, on pourra prévoir une machine thermique dotée par exemple de huit blocs toriques.

La machine thermique telle que décrite et représentée, est particulièrement destinée à fonctionner suivant le cycle de stirling mais il va de soi que la présente invention s'applique également aux machines thermiques fonctionnant suivant un tout autre cycle thermodynamique.

**Revendications**

1. Machine thermique à source d'énergie interne ou externe aux cylindres comportant plusieurs blocs moteurs dans chacun desquels est ménagée une chambre (1) qui reçoit un piston double effet, ledit piston et ladite chambre réalisant un capsulisme de détente (1A) et un capsulisme de compression (1B), chaque capsulisme de détente (1A) d'un ensemble chambre et piston étant en relation avec un capsulisme de compression (1B) d'un autre ensemble chambre et piston par l'intermédiaire d'un circuit de transfert d'un gaz entre ces deux capsulismes, ce circuit de transfert étant constitué par une source chaude (5) associé au capsulisme de détente, par un régénérateur (6) et par une source froide (7) associée au capsulisme de compression, machine thermique caractérisée en ce que les chambres (1), les pistons (2) et les capsulismes (1A) et (1B) réalisés sont en forme de secteur torique, qu'à chaque piston (2) est fixé de manière rigide un bras (3) qui forme bloc avec son propre arbre (8) monté dans des paliers (8A) et (8B) du bloc moteur correspondant, que lesdits arbres situés chacun à distance les uns des autres sont clavetés chacun à un bras (70) qui leur est propre auquel est articulée une biellette (71) articulée également à un maneton (72) commun aux autres biellettes (71), ce maneton étant fixé de manière excentrée sur un arbre central (4) rotatif et faisant office de vilebrequin, que les chambres (1) sont réparties autour du système constitué par l'arbre central (4) par le maneton, par les biellettes (71) et par les bras (70) et que les parois terminales des deux capsulismes associées l'un à l'autre par un même circuit de transfert sont coaxiales et parallèles.

2. Machine thermique selon la revendication 1 fonctionnant suivant le cycle de stirling et dont chaque circuit de transfert est constitué par une source chaude (5), un accumulateur thermique (6) ou régénérateur et une source froide (7), ladite source chaude étant associée à un capsulisme de détente (1A) et ladite source froide à un capsulisme de compression (1B) caractérisée en ce que le volume dans lequel évolue la masse de gaz entre deux chambres contiguës, c'est-à-dire le volume formé par le volume interne de la source chaude (5), par le volume interne de l'accumulateur (6) et par le volume interne de la source froide est en relation avec une chambre (61) à volume réglable par l'intermédiaire d'une conduite (65) en sorte que par variation du volume de ladite chambre (61) soit obtenue la variation de puissance du moteur.

3. Machine thermique selon les revendications précédentes caractérisée en ce que la source chaude (5), l'accumulateur thermique (6) et la source froide (7) disposés entre deux chambres (1) contiguës sont alignés suivant un même axe.

4. Machine thermique selon la revendication 1 comportant des chambres (1) qui reçoivent chacune un piston double effet monté de manière mobile caractérisée en ce que chaque piston est monté sans contact dans ladite chambre.

5. Machine thermique selon la revendication 1 comportant quatre chambres (1) qui reçoivent chacune un piston double effet fixé rigidement à un bras (3) formant bloc avec un arbre (8) monté dans des paliers, ladite machine comportant par ailleurs quatre circuits de transfert d'un gaz entre un capsulisme de détente (1A) d'un ensemble chambre et piston et capsulisme de compression (1B) d'un autre ensemble chambre et piston, machine caractérisée en ce que les quatre circuits de transfert sont de même longueur et sont disposés suivant des axes constituant les côtés d'un carré centré à l'arbre (4), les sommets arrondis sont constitués par l'axe (arc de circonférence cc') des chambres (1), les quatre centres des arcs de circonférence étant disposés chacun au sommet d'un carré centré à l'arbre (4) et les arbres (8) étant disposés suivant les sommets de ce dernier carré.

6. Machine thermique selon la revendication 1 caractérisée en ce que chaque bloc moteur (9) présente une forme torique dans laquelle est ménagée une chambre (1), une forme en secteur cylindrique radiale à la forme torique et un corps de palier (15) perpendiculaire à la forme en secteur cylindrique.

7. Machine thermique selon les revendications 1 et 6 caractérisée en ce que dans la forme en secteur cylindrique est ménagé un logement (10) pour le bras (3), ledit logement étant en communication avec la chambre (1) et que dans le corps de palier (15) est ménagé un logement (11) cylindrique recevant l'arbre (8) et ses paliers (8A) et (8B).

8. Machine thermique selon les revendications 1 et 7 comportant plusieurs blocs (9) dans chacun desquel est ménagé une chambre réalisant avec un piston un capsulisme de détente et dans chacun desquels est ménagé un logement (10) en correspondance avec la chambre (1) et avec ledit capsulisme pour former une enceinte pressurisée caractérisée en ce que chaque bloc est doté d'un organe d'étanchéité entre l'enceinte pressurisée et le logement (11) (fig. 4).

9. Machine thermique selon les revendications 7 et 8 comportant un joint à lèvre (42) assurant l'étanchéité entre l'enceinte pressurisée et le logement (11) qui reçoit les paliers (8A) et (8B) de l'arbre oscillant (8) caractérisée par une entretoise (46) entre les deux paliers (8A) et (8B) et autour de l'arbre (8) par une contre-pression sur la lèvre du joint réalisée par une injection d'huile de lubrification des paliers (8A) et (8B), l'huile étant injectée dans le logement (11) au niveau du premier palier (8A) et extraite de ce logement au niveau du second palier (8B) et par un double centrage de l'arbre (8) dans le logement (11) et dans l'entretoise (46) en sorte d'obtenir entre ledit arbre (8) et ladite entretoise (46) une surface à section de fuite constante (fig. 4).

10. Machine thermique selon les revendications 8 et 9 comportant une entretoise (46) entre les deux paliers (8A) et (8B) caractérisée en ce que l'huile sous pression est injectée dans le logement (11) entre le joint (42) et le palier (8A) et que le diamètre de l'orifice interne de l'entretoise assurant le passage de l'arbre (8) est tel que l'huile lors de son passage entre ledit arbre et ladite entretoise est laminée pour diminuer sa pression sur le joint (47) associé au palier (8B).

11. Machine thermique selon la revendication 8 caractérisée en ce que l'organe d'étanchéité est constitué par une paroi élastique imperméable au gaz de l'enceinte pressurisée déformable par torsion, disposée autour de l'arbre (8) et solidaire dudit arbre et de l'une des parois du logement (11).

12. Machine thermique selon les revendications 8 et 11 caractérisée en ce que la paroi élastique se présente sous la forme d'un manchon (50) doté de deux parois (51) et (52) en forme de couronne dont l'une, la paroi (52) est solidaire de l'arbre (8) et dont l'autre, la paroi (51) est appliquée par un organe de serrage contre un épaulement (54) dudit logement (11).

13. Machine thermique selon la revendication 2 comportant plusieurs volumes internes formés par le volume interne d'une source chaude (5), le volume interne d'un accumulateur thermique (6) et le volume interne d'une source froide (7), lesdits volumes étant chacun en relation avec une chambre (61) à volume réglable caractérisée en ce que la chambre est définie par une paroi déformable (63) dans une enveloppe (62) elle-même en communication avec le circuit d'un fluide sous pression.

14. Machine thermique selon les revendications 2 et 13 caractérisée en ce que le circuit de fluide sous pression est en relation avec le circuit de l'huile assurant une contre-pression au niveau du joint d'étanchéité (42).

15. Machine thermique selon les revendications 1 et 6 caractérisée en ce que les capsulismes 1A et 1B sont réalisés chacun dans une calotte amovible rapportée sur la forme en secteur torique du bloc moteur (9).

16. Machine thermique selon la revendication 15, caractérisée en ce que la calotte chaude (12) présente une jupe torique (12A) et une paroi terminale (34) concave, c'est-à-dire pénétrant dans le volume défini par la jupe (12A), ladite paroi (34) étant percée d'orifices de communication avec le circuit de transfert.

17. Machine thermique selon la revendication 15 caractérisée en ce que la calotte froide (13) présente une jupe torique (13A).

18. Machine thermique selon les revendications 3, 4 et 15 caractérisée en ce que la calotte froide (13) reçoit un couvercle culasse (14) percé d'orifices de communication (14A) avec le circuit de transfert.

19. Machine thermique selon les revendications 1 et 2 comportant des sources chaudes (5) et des sources froides (7) constituées par des conduites traversées par la masse de gaz lors de son transfert d'une chambre à l'autre caractérisée en ce que les conduites de chaque source sont de formes, de longueurs et de diamètre identiques.

20. Machine thermique selon la revendication 19 caractérisée en ce que les conduites de la source chaude présentent chacune une boucle (36A).

21. Machine thermique selon la revendication 1 comportant des moyens de transformation du mouvement circulaire alternatif des pistons en un mouvement rotatif communiqué à l'arbre central de sortie (4) constitués par des bras (70) clavetés chacun avec un arbre (8) et par des bielles (71) articulées chacune à un bras (70) et à un même maneton (72) solidaire de l'arbre (4) avec interposition d'une bague (73) ledit maneton étant excentré par rapport à l'arbre (4) et faisant office de vilebrequin caractérisée en ce que les bielles (71) sont montées libres en rotation sur la bague (73) et que ladite bague (73) est montée libre en rotation sur le maneton (72).

22. Machine thermique selon la revendication 1 comportant plusieurs blocs (9) identiques constitués chacun par deux demi-coquilles jointives caractérisée en ce que les demi-coquilles de chaque bloc moteur sont assemblées l'une à l'autre suivant un plan de joint longitudinal et médian à la chambre 1 ou suivant un plan de joint transversal à ladite chambre et médian au logement (11).

23. Machine thermique selon les revendications 8, 9 et 10 caractérisée en ce que chaque bloc moteur est doté dans chaque logement (11) d'un organe (42A) de soutien de la lèvre du joint comportant une contre-lèvre (49) élastique venant s'engager sous ladite lèvre du joint, ladite contre-lèvre (49) se présentant sous une forme décroissante et se déformant en fonction de la différence de pression entre le logement (11) et l'enceinte pressurisée de manière à porter sur l'arbre (8) lorsque la vitesse angulaire de ce dernier est nulle et/ou lorsque la différence de pression est maximale (fig. 4).

24. Machine thermique selon les revendications 8, 11 et 12 caractérisée en ce que le manchon (50) présente une armature constituée par des couronnes métalliques (58) parallèles réparties suivant une loi conforme aux contraintes dues aux pressions ou régulièrement espacées, noyées dans la masse du manchon et dont la périphérie dépasse la surface extérieure dudit manchon.

25. Machine thermique selon les revendications 8 et 24 caractérisée en ce que les couronnes (58) constituant l'armature du manchon présentent des entailles (59) angulairement espacées et angulairement décalées d'une couronne à l'autre en sorte que l'huile suive un parcours sinueux.

26. Machine thermique selon les revendications 8 et 12 caractérisée en ce que l'organe de serrage de l'embase (51) du manchon contre l'épaulement (54) du logement (11) est constitué par un élément tubulaire cylindrique ajusté dans le logement (11) autour du manchon présentant à une de ses extrémités une embase circulaire (57) de fixation à l'embouchure dudit logement.

27. Machine thermique selon la revendication 13 dont les volumes dans chacun desquels évolue une masse de gaz sont en relation avec une chambre à volume variable définie par une paroi (63) déformable dans une enceinte ladite paroi assurant la séparation entre la chambre (61) et un volume variable (67) de l'enceinte dans lequel est introduit le fluide sous pression caractérisée en ce que dans le volume (67) est disposé un organe élastique (68) en pression contre ladite paroi (63) et la paroi de l'enceinte et une obturation.

**Claims**

1. A thermal machine with a source of energy internal or external to the cylinders comprising several engine blocks into each of which is formed a chamber (1) which receives a double acting piston, said piston and said chamber forming a sealed expansion compartment (1A) and a sealed compression compartment (1B), each expansion compartment (1A) of a chamber and piston assembly being in relation with a compression compartment (1B) of another chamber and piston assembly via a circuit transferring a gas between these two compartments, this transfer circuit being formed by a hot source (5) associated with the expansion compartment, by a regenerator (6) and by a cold source (7), associated with the compression compartment, which thermal machine is characterized in that the chambers (1), the pistons (2) and the compartments (1A) and (1B) are in the form of a toric sector that to each piston (2) there is rigidly fixed an arm (3) which is integral with its own shaft (8) mounted in bearings (8A) and (8B) of the corresponding engine block, that said shafts each situated at a distance from each other are each keyed to an arm (70) which is proper to them to which is articulated a link (71) also articulated to a crank pin (72) common to the other links (71) this crank pin being fixed excentrically on a central rotary shaft (4) and serving as crank shaft, that the chambers (1) are spaced apart about the system formed by the central shaft (4), the crank pin, the links (71) and the arms (70) and that the end walls of the two compartments associated with each other *via* the same transfer circuit are coaxial and parallel.

2. Thermal machine according to claim 1 operating in accordance with the stirling cycle and each transfer circuit of which is formed by a hot source (5), a thermal accumulator (6), or regenerator and a cold source (7), said hot source being associated with a sealed expansion compartment (1A) and said cold source with a sealed compression compartment (1B), characterized in that the volume in which the mass of gas moves between two contiguous chambers, namely the volume formed by the internal volume of the hot source (5), the internal volume of the accumulator (6) and the internal volume of the cold source is in relation with an adjustable volume chamber (61) via a duct (65) so that by varying the volume of said chamber (61) variation of the power of the engine is obtained.

3. Thermal machine according to the preceding claims, characterized in that the hot source (5), the thermal accumulator (6) and the cold source (7) disposed between contiguous chambers (1) are aligned along the same axis.

4. Thermal machine according to claim 1 comprising chambers (1) which each receive a movably mounted double acting piston, characterized in that each piston is mounted without contacting said chamber.

5. Thermal machine according to claim 1, comprising four chambers (1) which each receive a double acting piston fixed rigidly to an arm (3) integral with a shaft (8) mounted in bearings, said machine further comprising four circuits for transferring a gas between a sealed expansion compartment (A1) of a chamber and piston assembly and a sealed compression compartment (1B) of another chamber and piston assembly, machine characterized in that the four transfer circuits are of the same length and are disposed along axes forming the sides of a square centered on the shaft (4), the rounded apices are formed by the axis (arc of circumference cc') of the chambers (1), the four centers of the arcs of circumference being each disposed at the apex of a square centered on the shaft (4) and the shafts (8) being disposed at the apices of this last square.

6. Thermal machine according to claim 1, characterized in that each engine block (9) has a toric form in which is formed a chamber (1), a cylindrical sector form radial to the toric form and a bearing body (15) perpendicular to the cylindrical sector form.

7. Thermal machine according to claims 1 and 6 characterized in that in the cylindrical sector form is provided a housing (10) for the arm (3), said housing being in communication with the chamber (1) and that in the bearing body (15) is formed a cylindrical housing (11) receiving the shaft (8) and its bearings (8A) and (8B).

8. Thermal machine according to claims 1 and 7 comprising several blocks (9) in each of which is formed a chamber providing with a piston a sealed expansion compartment and in each of which is formed a housing (10) in correspondance with the chamber (1), and with said compartment so as to form a pressurized enclosure, characterized in that each block comprises a sealing member between the pressurized enclosure and the housing (11) (Figure 4).

9. Thermal machine according to claims 7 and 8 comprising a lip joint (42) providing sealing between the pressurized enclosure and the housing (11) which receive the bearings (8A) and (8B) of the oscillating shaft (8), characterized by a spacer (46) between the two bearings (8A) and (8B) and about the shaft (8) by a counter pressure on the lip of the seal provided by injection of lubricating oil of the bearings (8A) and (8B), the oil being injected in the housing (11) at the level of the first bearing (8A) and removed from this housing at the level of the second bearing (8B) and by a double centering of the shaft (8) in the housing (11) and in the spacer (46) so as to obtain between said shaft (8) and said spacer (46) a surface with constant leak section (Figure 4).

10. Thermal machine according to claims 8 and 9, comprising a spacer (46) between the two bearings (8A) and (8B), characterized in that the pressurized oil is injected into the housing (11) between the seal (42) and the bearing (8A) and that the diameter of the internal orifice of the spacer allowing passage of the shaft (8) is such that the oil, during its passage between said shaft and said spacer, is laminated so as to reduce its pressure on the seal (47) associated with the bearing (8B).

11. Thermal machine according to claim 8, characterized in that the sealing member is formed by a resilient wall impermeable to the gas of the pressurized enclosure deformable by torsion, disposed about the shaft (8) and integral with said shaft and with one of the walls of the housing (11).

12. Thermal machine according to claims 8 and 11, characterized in that the resilient wall is in the form of a sleeve (50) with two walls (51) and (52) in the form of a ring one of which, wall (52), is integral with the shaft (8) and the other of which, wall (51) is applied by a clamping member against a shoulder (54) of said housing (11).

13. Thermal machine according to claim 2, comprising several internal volumes formed by the internal volume of a hot source (5), the internal volume of thermal accumulator (6) and the internal volume of a cold source (7), said volumes being each in relation with an adjustable volume chamber (61), characterized in that the chamber is defined by a deformable wall (61) in an envelope (62) itself in communication with the circuit of a pressurized fluid.

14. Thermal machine according to claims 2 and 13, characterized in that the pressurized fluid circuit is in relation with the circuit of the oil providing a counter pressure at the level of the seal (42).

15. Thermal machine according to claims 1 and 6, characterized in that the compartments 1A and 1B are each formed in a removable skull cap fixed to the toric sector form of the engine block (9).

16. Thermal machine according to claim 15, characterized in that the hot skull cap (12) has a toric skirt (12A) and a concave end wall (34), that is to say penetrating into the volume defined by the skirt (12A), said wall (34) being pierced with orifices for communication with the transfer circuit.

17. Thermal machine according to claim 15, characterized in that the cold skull cap (13) has a toric skirt (13A).

18. Thermal machine according to claims 3, 4 and 15 characterized in that the cold skull cap (13) receives a cylinder head (14) pierced with orifices (14A) for communication with the transfer circuit.

19. Thermal machine according to claims 1 and 2, comprising hot sources (5) and cold sources (7) formed by ducts through which flows the mass of gas during its transfer from one chamber to another, characterized in that the ducts of each source have identical forms, lengths and diameters.

20. Thermal machine according to claim 19, characterized in that the ducts of the hot source each have a loop (36A).

21. Thermal machine according to claim 1, including means for transforming the reciprocating circular movement of the pistons into a rotary movement communicated to the central output shaft (4) formed by arms (70) each keyed with a shaft (8) and by links (71) each articulated to an arm (70) and to the same crank pin (72) integral with the shaft (4) with interpositioning of a ring (73), said crank pin being excentric with respect to the shaft (4) and serving as crank shaft, characterized in that the links (71) are mounted freely rotating on the ring (73) and that said ring (73) is mounted for free rotation on the crank pin (72).

22. Thermal machine according to claim 1, comprising several identical blocks (9) each formed by two jointing half shells, characterized in that the half shells of each engine block are assembled together along a longitudinal joint plane median to the chamber 1 or along a joint plane transversal to said chamber and median to the housing (11).

23. Thermal machine according to claims 8, 9 and 10, characterized in that each engine block comprises in each housing (11) a member (42A) for supporting the lip of the seal comprising a resilient counter lip (49) engaging under said lip of the seal, said counter lip (49) being in a decreasing form and being deformed as a function of the pressure difference between the housing (11) and the pressurized enclosure so as to bear on the shaft (8) when the angular speed of this latter is zero and/or when the pressure difference is maximum (Figure 4).

24. Thermal machine according to claims 8, 11 and 12, characterized in that the sleeve (50) has a frame formed by parallel metal rings (58) distributed in accordance with a law conforming to the stresses due to the pressures or regularly spaced, embedded in the mass of the sleeve and whose periphery projects from the external surface of said sleeve.

25. Thermal machine according to claims 8 and 24, characterized in that the rings (58) forming the frame of the sleeve have angularly spaced notches (59) offset angularly from one ring to the next so that the oil follows a sinuous path.

26. Thermal machine according to claims 8 and 12, characterized in that the member for clamping the base (51) of the sleeve against the shoulder (54) of the housing (11) is formed by a cylindrical tubular element fitted in the housing (11) about the sleeve having at one of its ends a circular base (57) for fixing to the mouth of said housing.

27. Thermal machine according to claim 13 in which the volumes in each of which moves a mass of gas are in relation with a variable volume chamber defined by a deformable wall (63) in an enclosure, said wall ensuring the separation between the chamber (61) and a variable volume (67) of the enclosure into which the pressurized fluid is introduced, characterized in that in the volume (67) is disposed an resilient member (68) pressed against said wall (63) and the wall of the enclosure and a closure means.

**Patentansprüche**

1. Verbrennungsmotor mit interner oder externer Energiequelle mit Zylindern, die mehrere Motorenblöcke enthalten, in deren jedem eine Kammer (1) eingerichtet ist, die einen doppelt wirkenden Kolben aufnimmt, wobei der besagte Kolben und die besagte Kammer eine Entspannungskapsel (1A) und eine Druckkapsel (1B) bilden, sodass jede Entspannungskapsel (1A) einer Kammer- und Kolbeneinheit in Beziehung mit einer Druckkapsel (1B) einer anderen Kammer- und Kolbeneinheit steht, über einen Gastransferkreislauf zwischen dieser beiden Kapseln, wobei der Transferkreis durch eine der Entspannungskapsel zugeordnete heisse Quelle (5) gebildet wird, durch einen Regenerator (6) und eine Kältequelle (7), die der Druckkapsel zugeordnet ist, besagter Verbrennungsmotor dadurch gekennzeichnet, dass die Kammern (1), die Kolben (2) und die Kapseln (1A) und (1B) die Form eines torischen Abschnittes aufweisen, dass an jedem Kolben (2) ein Arm (2) starr befestigt ist, der mit seiner Innenwelle (8) einen Block bildet, die in den Lagern (8A) und (8B) des entsprechenden Motorenblockes montiert ist, dass die besagten Wellen, die voneinander entfernt sind, an einen Arm (70) angekoppelt sind, der ihnen eigen ist und an den eine Pleuelstange (71) angegliedert ist, die auch an einen den anderen Pleuelstangen (71) gemeinsamen Zapfen (72) angegliedert ist, wobei der Zapfen exzentriert an einer zentralen Drehwelle (4) befestigt ist und als Kurbelwelle dient, und die Kammern (1) um das System herum angeordnet sind, das durch die zentrale Welle (4), durch den Zapfen, die Pleuelstangen (71) und den Arm (70) gebildet wird, und die Endwände der beiden Kapseln, die durch einen gleichen Transferkreislauf einander zugeordnet sind, koaxial und parallel sind.

2. Verbrennungsmotor gemäss Anspruch 1, nach dem Stirling-Zyklus betrieben, deren jeder Transferkreis durch eine heisse Quelle (5), einen Wärmeakkumulator (6) oder -regenerator und eine kalte Quelle (7) gebildet wird, wobei die warme Quelle einem Entspannungskapselgehäuse (1A) und die besagte kalte Quelle einem Druckkapselgehäuse (1B) zugeordnet ist, dadurch gekennzeichnet, dass das Volumen, in dem sich die Gasmasse zwischen zwei aneinander angrenzenden Kammern bewegt, d. h. das Volumen, das sich aus dem Innenvolumen der warmen Quelle (5) dem Innenvolumen des Akkumulators (6) und dem Innenvolumen der kalten Quelle zusammensetzt, in Beziehung mit einer Kammer (61) mit verstellbarem Volumen besteht, durch eine Leitung (65), sodass durch die Veränderung des Volumens der besagten Kammer (61) die Veränderung der Motorenleistung bewirkt wird.

3. Verbrennungsmotor nach den vorangehenden Ansprüchen, dadurch gekennzeichnet, dass die heisse Quelle (5), der Wärmeakkumulator (6) und die kalte Quelle (7), die zwischen zwei aneinander angrenzenden Kammern (1) angeordnet sind, in der gleichen Achse ausgerichtet sind.

4. Verbrennungsmotor gemäss Anspruch 1, mit Kammern 1, die je einen doppelt wirkenden Kolben aufnehmen, der beweglich montiert ist, dadurch gekennzeichnet, dass jeder Kolben in der besagten Kammer kontaktfrei montiert ist.

5. Verbrennungsmotor gemäss Anspruch 1 mit vier Kammern (1), die je einen doppelt wirkenden Zylinder aufnehmen, der starr an einem Arm (3) befestigt ist, welcher mit einer Welle (8) formschlüssig verbunden ist, die in den Lagern montiert ist, wobei die besagte Maschine ausserdem vier Transferkreise eines Gases zwischen einem Entspannungskapselgehäuse (1A) einer Einheit aus Kammer und Kolben und einer Druckkapseleinheit (1B) einer anderen Kammer und Kolbeneinheit enthält, dadurch gekennzeichnet, dass die vier Transferkreise gleicher Länge und nach Achsen angeordnet sind, die die Seiten eines auf die Welle (4) zentrierten Quadrates bilden, während die abgerundeten Spitzen von der Achse (Bogen mit Umfang cc') der Kammern (1) gebildet werden, und die vier Zentren der Umfangbögen jeweils an der Spitze eines auf die Welle (4) zentrierten Quadrates angeordnet sind, und die Wellen (8) nach den Spitzen dieses letzten Quadrates angeordnet sind.

6. Verbrennungsmotor gemäss Anspruch 1, dadurch gekennzeichnet, dass jeder Motorenblock (9) eine torische Form aufweist, in der eine Kammer (1) angebracht ist, eine Form mit zylindrischem Sektor radial zur torischen Form und einen Lagerkörper (15) senkrecht zur Zylindersektorform.

7. Verbrennungsmotor gemäss den Ansprüchen 1 und 6, dadurch gekennzeichnet, dass in der Zylindersektorform eine Aussparung (10) für den Arm (3) eingerichtet ist, sodass die besagte Aussparung in Verbindung mit der Kammer (1) steht und dass im Lagerkörper (15) eine zylindrische Aussparung (11) vorgesehen ist, die die Welle (8) und die Lager (8A) und (8B) aufnimmt.

8. Verbrennungsmotor gemäss Anspruch 1 und 7, mit mehreren Blöcken (9), in denen je eine Kammer eingerichtet ist, die mit einem Kolben ein Entspannungskapselgehäuse bildet und in denen je eine Aussparung (10) eingerichtet ist, die mit der Kammer (1) und mit der besagten Kapseleinheit in Verbindung steht, um eine Druckkammer zu bilden, dadurch gekennzeichnet, dass jeder Block mit einem Abdichtungsorgan zwischen der Druckkammer und der Aussparung (11) versehen ist (Abb. 4).

9. Verbrennungsmotor gemäss Anspruch 7 und 8 mit einer Lippendichtung (42), welche für die Abdichtung zwischen der Druckkammer und der Aussparung (11) sorgt, die die Lager (8A) und (8B) der Schwingwelle (8) aufnimmt, gekennzeichnet durch eine Strebe (46) zwischen den beiden Lagern (8A) und (8B) und um die Welle (8), durch einen Gegendruck auf die Dichtungslippe, bewirkt durch Einspritzung von Schmieröl der Lager (8A) und (8B), wobei das Öl in die Aussparung (11) in der Höhe des ersten Lagers (8A) eingespritzt und aus diesem Lager in der Höhe des zweiten Lagers (8B) abgezogen wird, und durch eine doppelte Zentrierung der Welle (8) in der Aussparung (11) und in der Strebe (46), sodass zwischen der besagten Welle (8) und der besagten Strebe (46) eine Fläche mit konstantem Austrittsquerschnitt besteht (Abb. 4).

10. Verbrennungsmotor gemäss Anspruch 8 und 9 mit einer Strebe (46) zwischen den beiden Lagern (8A) und (8B), dadurch gekennzeichnet, dass das Öl unter Druck in die Aussparung (11) zwischen der Dichtung (42) und dem Lager (8A) eingespritzt wird und dass der Durchmesser der internen Öffnung der Strebe, welche den Durchgang der Welle (8) gewährleistet, so bemessen ist, dass das Öl beim Durchgang durch die besagte Welle und die besagte Strebe glattgedrückt wird, um den Druck auf die Dichtung (47) in Verbindung mit dem Lager (8B) zu verringern.

11. Verbrennungsmotor gemäss Anspruch 8, dadurch gekennzeichnet, dass das Dichtungsorgan aus einer elastischen Wand besteht, welche das Gas der durch Drehung verformbaren Druckkammer undurchlässig ist, welche um die Welle (8) angeordnet ist und mit der besagten Welle und einer der Wände der Aussparung (11) fest verbunden ist.

12. Verbrennungsmotor gemäss den Ansprüchen (8) und (11), dadurch gekennzeichnet, dass die elastische Wand in Form einer Muffe (50) und zwei Wänden (51) und (52) vorliegt in Kranzform, von denen eine, die Wand (52), mit der Welle (8) fest verbunden ist und die andere, die Wand (51), durch ein Drückorgan gegen einen Vorsprung (54) der besagten Aussparung (11) angedrückt wird.

13. Verbrennungsmotor gemäss Anspruch 2, mit mehreren Innenvolumen, gebildet aus dem internen Volumen einer warmen Quelle (5), dem internen Volumen eines Wärmeakkumulators (6) und dem internen Volumen einer kalten Quelle (7), wobei die besagten Volumen jeweils in Beziehung mit einer Kammer (61) mit verstellbarem Volumen stehen, dadurch gekennzeichnet, dass die Kammer durch eine verformbare Wand (61) festgelegt ist, in einer Hülle (62), die in Verbindung mit dem Medienkreis unter Druck steht.

14. Verbrennungsmotor gemäss Anspruch 2 und 13, dadurch gekennzeichnet, dass der Kreis des Mediums unter Druck in Beziehung mit dem Ölkreis steht, der einen Gegendruck in Höhe der Dichtung (42) gewährleistet.

15. Verbrennungsmotor gemäss Anspruch 1 und 6, dadurch gekennzeichnet, dass die Kapselgehäuse (1A) und (1B) jeweils in einer abnehmbaren Kappe ausgeführt sind, die auf die Torussektorform des Motorenblocks (9) aufgesetzt ist.

16. Verbrennungsmotor gemäss Anspruch 15, dadurch gekennzeichnet, dass die warme Kappe

14

(12) einen torischen Mantel (12A) und eine konkave Endwand (34) aufweist, die in das vom Mantel (12A) gebildete Volumen eindringt, wobei in die besagte Wand (34) Verbindungslöcher mit dem Transferkreis gebohrt sind.

17. Verbrennungsmotor gemäss Anspruch (15), dadurch gekennzeichnet, dass die kalte Kappe (13) einen torischen Mantel (13A) aufweist.

18. Verbrennungsmotor gemäss Anspruch 3, 4 und 15, dadurch gekennzeichnet, dass der kalte Mantel (13) einen Zylinderkopfdeckel (14) aufnimmt, in den Verbindungslöcher (14A) mit dem Transferkreis gebohrt sind.

19. Verbrennungsmotor gemäss Anspruch 1 und 2 mit heissen (5) und kalten Quellen (7), gebildet aus den Leitungen, durch die Gasmasse beim Transfer von einer Kammer in die andere fliesst, dadurch gekennzeichnet, dass die Leitungen einer jeden Quelle gleiche Formlänge und gleichen Durchmesser aufweisen.

20. Verbrennungsmotor gemäss Anspruch (19), dadurch gekennzeichnet, dass die Leitungen der warmen Quelle je eine Schleife (36A) aufweisen.

21. Verbrennungsmotor gemäss Anspruch 1, mit Mitteln für die Verwandlung der kreisförmigen abwechselnden Bewegung der Kolben in eine Drehbewegung, die der zentralen Ausgangswelle (4) mitgeteilt wird, bestehend aus Armen (70), die jeweils mit einer Welle (8) verkeilt sind, und aus Pleuelstangen (71), die je an einen Arm (70) und an einen gleichen Zapfen (72) angegliedert sind, der mit der Welle (4) fest verbunden ist, mit einem dazwischengefügten Ring (73), wobei besagter Zapfen in Bezug auf die Welle (4) exzentriert ist und als Kurbelwelle wirkt, dadurch gekennzeichnet, dass die Pleuelstangen (73) frei drehbar auf dem Ring (73) montiert sind und dass der besagte Ring (73) frei drehbar auf dem Zapfen (72) montiert ist.

22. Verbrennungsmotor gemäss Anspruch 1, mit mehreren gleichen Blöcken (9), bestehend aus je zwei aneinanderliegenden Halbschalen, dadurch gekennzeichnet, dass die Halbschalen eines jeden Motorblockes aneinander in einer Längsebene und Mittelebene zur Kammer 1 montiert oder in einer Ebene quer zur besagten Kammer und auf die Aussparung (11) zentriert sind.

23. Verbrennungsmotor gemäss Anspruch 8, 9 und 10, dadurch gekennzeichnet, dass jeder Motorenblock in jeder Aussparung (11) eines Organs (42A) zum Stützen der Dichtungslippe eine plastische Gegenlippe (49) enthält, die unter die besagte Dichtungslippe eingreift, wobei die besagte Gegenlippe (49) in abnehmender Form vorliegt und sich mit dem Druckunterschied zwischen der Aussparung (11) und der Kammer unter Druck verformt, sodass sie an der Welle (8) anliegt, wenn die Winkelgeschwindigkeit dieser letzteren Null ist und/oder wenn der Druckunterschied sein Maximum erreicht (Abb. 4).

24. Verbrennungsmotor gemäss Anspruch 8, 11 und 12, dadurch gekennzeichnet, dass die Muffe (50) eine Armatur aufweist, die aus parallelen Metallkränzen (58) besteht, welche nach einem Gesetz verteilt sind, das den Druckbelastungen entspricht, oder gleichmässige Abstände aufweisen, in der Masse der Muffe versenkt, deren Rand über die Aussenfläche der besagten Muffe vorsteht.

25. Verbrennungsmotor gemäss Anspruch 8 und 24, dadurch gekennzeichnet, dass die Kränze (58) die Bewehrung der Muffe bilden mit Einkerbungen (59) in Winkelabständen, und winkelmässig von einem Kranz zum anderen verschoben, sodass das Öl einen gewundenen Pfad einschlägt.

26. Verbrennungsmotor gemäss Anspruch 8 und 12, dadurch gekennzeichnet, dass das Anziehorgan des Sockels (51) der Muffe gegen den Vorsprung (54) der Aussparung (11) von einem zylindrischen Rohrbauteil gebildet wird, das in die Einsparung (11) und die Muffe eingepasst ist und an einem seiner Enden einen kreisförmigen Sockel (57) für die Befestigung an der Mündung der besagten Aussparung aufweist.

27. Verbrennungsmotor gemäss Anspruch 13, deren Volumen, in derem jedem sich eine Gasmasse bewegt, in Verbindung mit einer Kammer mit veränderlichem Volumen stehen, definiert durch eine verformbare Wand (63) in einer Kammer der besagten Wand, welche die Trennung zwischen der Kammer (61) und einem veränderlichen Volumen (67) der Kammer bildet, in die das Medium unter Druck eingeführt wird, dadurch gekennzeichnet, dass in dem Volumen (67) ein elastisches Organ (68) Druck gegen die besagte Wand (63) und die Wand der Kammer und einen Verschluss ausübt.

0 114 781

Fig 1

1

Fig 2

Fig 3

Fig 4

Fig 5

Fig 6

36

12

5

Fig 7

Coupe CC

Fig 8